# EUROPÄISCHE PATENTSCHRIFT

(11) **EP 0 682 804 B1**
(45) Veröffentlichungstag und Bekanntmachung des Hinweises auf die Patenterteilung: **23.04.1997**
(21) Anmeldenummer: 94904955.5
(22) Anmeldetag: 24.01.1994
(51) Int. Cl.: G21C 1/09

(54) **Vorrichtung zur Drucksicherung eines Druckbehälters**
Device providing protection against pressure losses in a pressure vessel
Dispositif de maintien sous pression d'une enceinte pressurée

(30) Priorität: 05.02.1993 DE 4303440
(43) Veröffentlichungstag der Anmeldung: 22.11.1995
(73) Patentinhaber: SIEMENS AKTIENGESELLSCHAFT, 80333 München (DE)
(72) Erfinder: LAURER, Erwin, D-91096 Möhrendorf (DE); CONRADS, Hermann-Josef, D-91074 Herzogenaurach (DE); MANDL, Rafael, D-91056 Erlangen (DE)
(86) Internationale Anmeldenummer: DE9400051
(87) Internationale Veröffentlichungsnummer: WO9418678

(56) Entgegenhaltungen:
- EP-A- 0 160 401
- EP-A- 0 212 949
- DE-A- 4 041 418
- PATENT ABSTRACTS OF JAPAN, vol. 14, no. 228 (M-0973) 15. Mai 1990 ; & JP-A-02 057 784

## Beschreibung

Die Erfindung bezieht sich auf eine Vorrichtung zur Drucksicherung eines Druckbehälters, insbesondere im Primärkreis eines Druckwasserreaktors, mit einer Ventilanordnung, die an einem mit dem Druckbehälter verbundenen Formstück (Druckhalterdom) angeordnet ist, wobei die Ventilanordnung mindestens ein Sicherheitsventil mit einem Ventilsitz in einem Gehäuseblock umfaßt, und wobei eine Wasservorlage für das Sicherheitsventil vorgesehen ist.

Eine derartige Vorrichtung ist aus der DE-OS 40 41 418 bekannt. Sie ist im Primärkreis eines Druckwasserreaktors eingesetzt, um den Druck innerhalb des Primärkreises unterhalb des zulässigen Maximaldrucks, z.B. etwa 170 bar, zu halten. Dazu ist im Primärkreis ein Druckhalter oder Druckbehälter über ein Sicherheitsventil an einen Abblasebehälter angeschlossen. Das Sicherheitsventil wird im Anforderungs- oder Prüffall über ein Steuerventil geöffnet. Die Betätigung des Steuerventils wird vom im Druckhalter herrschenden Druck bewirkt.

Im Normalfall steht am Ventilsitz und auf der Vorderseite des Ventiltellers des Sicherheitsventils das Druckmittel mit dem Primärkreisdruck von etwa 155 bar und einer Primärkreistemperatur von etwa 350° C an. Dagegen herrscht hinter dem Ventilsitz und auf der Rückseite des Ventiltellers lediglich atmosphärischer Druck. Der dadurch bedingte Temperaturunterschied zwischen der Vorderseite und der Rückseite des Ventiltellers hat im Fall auch einer nur geringen Schleichleckage zur Folge, daß sich auf der deutlich kühleren Rückseite des Ventiltellers, d.h. hinter dem Ventilsitz, Wassertröpfchen bilden, die eine lokale Kühlung bewirken. Dies wiederum führt zu einem thermischen Verzug des Ventiltellers und/oder des Ventilsitzes im Gehäuse, so daß sich die anfängliche Schleichleckage zu einer derart großen Leckage erhöhen kann, daß diese kühltechnisch im Abblasebehälter nicht mehr beherrscht werden kann. Dies kann dazu führen, daß die gesamte Anlage abgeschaltet werden muß.

Der Erfindung liegt die Aufgabe zugrunde, eine Vorrichtung zur Drucksicherung der eingangs genannten Art derart zu ertüchtigen, daß eine ausreichende Dichtigkeit, insbesondere Sitzdichtigkeit, gewährleistet ist.

Diese Aufgabe wird erfindungsgemäß gelöst durch ein Kanal zur Aufnahme der Wasservorlage innerhalb des Gehäuseblocks und/oder innerhalb des Formstücks.

Unter Formstück wird hier ein Stutzen, Ansatz oder Anschlußstück beliebiger Formgebung, speziell ein sogenannter Druckhalterdom für Kernkraftwerks-Druckbehälter, verstanden.

Die Wasservorlage, die z.B. durch in dem Kanal kondensierenden Dampf gebildet wird, hat bei geschlossenem Sicherheitsventil die Wirkung einer thermischen Brücke. Im Normalfall ist daher im Gehäuseblock der Ventilanordnung im Bereich des Ventilsitzes kein heißer Dampf, sondern vergleichsweise kühleres Wasser vorhanden.

Zweckmäßigerweise sind mehrere, vorzugsweise drei, Ventilanordnungen am Umfang des Formstücks verteilt angeordnet. Die Ventilanordnungen sind dabei vorteilhafterweise radial am rohrförmigen Formstück angeflanscht.

Um im Ansprech- oder Prüffall einen Temperaturschock im Bereich des Ventilsitzes aufgrund eines relativ großen Temperaturunterschieds zwischen dem über das Sicherheitsventil zunächst abströmenden Wasser der Wasservorlage und dem darauf folgenden heißen Dampf aus dem Druckbehälter zu vermeiden, wird vorteilhafterweise entlang der Wasservorlage ein Temperaturgefälle gezielt eingestellt. Dies wird in vorteilhafter Ausgestaltung der Vorrichtung dadurch erreicht, daß die oder jede Ventilanordnung eine Wärmeisolierung aufweist, deren Isolierwirkung entlang des Kanals für die Wasservorlage abnimmt. Die Abnahme der Isolierwirkung kann bewirkt werden durch eine stufenweise oder kontinuierliche Verringerung der Isolierwanddicke oder durch eine geringere Wärmedämmung. Durch eine derartige, absichtlich reduzierte lokale Wärmeisolierung kann gezielt ein Temperaturgefälle entlang des die Wasservorlage führenden Kanals von etwa 300 bis 350° C am Übergang zwischen Dampf und Wasser im Bereich des Formstücks auf etwa 150 bis 200° C am Ventilsitz eingestellt werden.

Der innerhalb des Gehäuseblocks der Ventilanordnung verlaufende Kanal für die Wasservorlage kann unterschiedlich ausgebildet sein. Er kann z.B. horizontal oder zum Ventilsitz hin geneigt verlaufen. Er kann aber auch siphonartig ausgebildet sein.

Da üblicherweise mehrere Ventilanordnungen vorgesehen sind, sollten diese zweckmäßigerweise eine gemeinsame Wasservorlage haben. In Ausgestaltung der Vorrichtung zur Drucksicherung umfaßt daher das Formstück einen mit dem Kanal eines jeden Gehäuseblocks in Verbindung stehenden Ringkanal mit einer für alle Ventilanordnungen gemeinsamen Wasservorlage.

Die mit der Erfindung erzielten Vorteile bestehen insbesondere darin, daß durch eine Wasservorlage auf der druckbeaufschlagten Seite des Sicherheitsventils eine ausreichende Dichtigkeit gewährleistet ist. Außerdem werden durch eine gezielt reduzierte Wärmeisolierung der oder jeder Ventilanordnung Temperaturschocks am Ventilstutzen und/oder Ventilteller und/oder im Gehäuseblock im Ansprech- oder Prüffall sicher vermieden. Da der oder jeder Kanal für die Wasservorlage innerhalb des Formstücks und des Gehäuseblocks angeordnet ist, ist der Einsatz freiliegender Rohrleitungen, Rohrbogen und Formstücke vermieden und eine kompakte Bauweise erreicht.

Ausführungsbeispiele der Erfindung werden anhand einer Zeichnung näher erläutert; darin zeigen:
Figur 1 einen Druckbehälter mit aufgesetztem Formstück (Druckhalterdom) und einen daran über mehrere Ventilanordnungen angeschlossenen Abblasebehälter,
Figuren 2 und 3 einen Ausschnitt II bzw. III aus Figur 1 in größerem Maßstab mit jeweils einer Ventilanordnung mit einer gehäuseinternen Wasservorlage, und
Figur 4 einen anderen Ausschnitt IV aus Figur 1 in größerem Maßstab mit einer allen Ventilanordnungen gemeinsamen Wasservorlage.

Einander entsprechende Teile sind in allen Figuren mit den gleichen Bezugszeichen versehen.

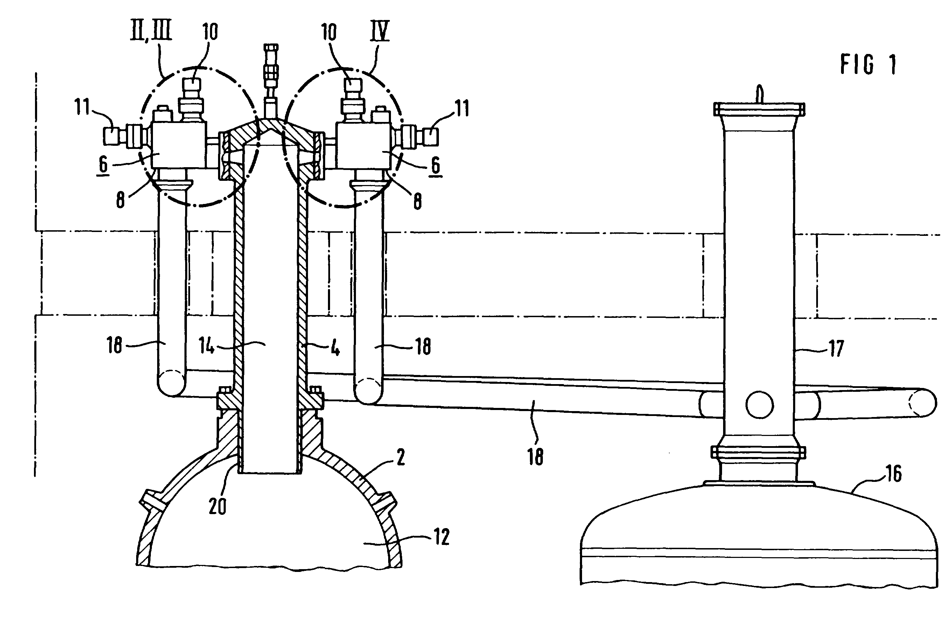

Gemäß Figur 1 ist der Druckbehälter 2 mit einem Stutzen oder Formstück 4 versehen, das in der Kraftwerkstechnik auch als Druckhalterdom bezeichnet wird. An das zylindrische Formstück 4 sind mehrere Ventilanordnungen 6 mit ihren Gehäuseblöcken 8 radial angeflanscht. Das Formstück 4 ist auf den Druckbehälter 2 aufgesetzt und dort angeflanscht.

Die jeweils zwei Sicherheitsventile 10 und 11 enthaltenden Ventilanordnungen 6 verbinden den Innenraum 12 des druckführenden Druckbehälters 2 über den Innenraum 14 des ebenfalls druckführenden Formstücks 4 mit einem drucklosen Abblasebehälter 16. Der Abblasebehälter 16 ist über seinen Abblasedom 17 und daran angeschlossene Abblaseleitungen 18 mit den Ventilanordnungen 6 verbunden.

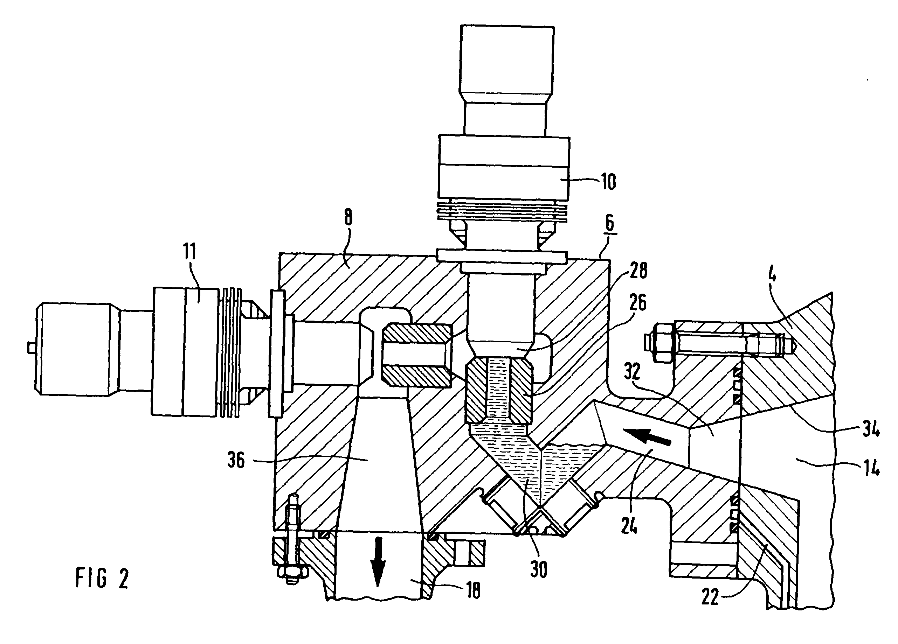

Eine innerhalb des Formstücks 4 vorgesehene Manschette 20, die in den Druckbehälter 2 hineinragt, dient zur Bildung eines Druckentnahmekanals 22, der in den Figuren 2 bis 4 sichtbar ist. Wie aus der eingangs erwähnten DE-OS 40 41 418 bereits bekannt, steht der Druckentnahmekanal oder die Druckhaltebohrung 22 über (nicht dargestellte) Steuerventile mit innerhalb der Ventilanordnungen 6 vorgesehenen (nicht dargestellten) Steuerkanälen in Verbindung.

Wie in Figur 2 dargestellt, weist die Ventilanordnung 6 innerhalb ihres Gehäuseblocks 8 einen Kanal 24 auf. Der Kanal 24 verläuft zwischen dem Innenraum 14 des Formstücks 4 und einem Ventilsitz 26 des geschlossenen Sicherheitsventils 10. In dem siphonartig ausgebildeten Kanal 24 befindet sich eine bis an einen Ventilteller 28 des geschlossenen Sicherheitsventils 10 hinreichende Wasservorlage 30. Am Übergang zwischen dem Formstück 4 und dem Gehäuseblock 8 ist die Einmündung 32 des Kanals 24 im Gehäuseblock 10 an die Austrittsöffnung 34 des Formstücks 4 angepaßt.

In Figur 2 ist ein vom Sicherheitsventil 10 verschlossener Abblasekanal 36 mit dem halb geöffneten Sicherheitsventil 11 dargestellt. Der Abblasekanal 36 befindet sich ebenfalls im Gehäuseblock 8. Er steht über die Abblaseleitung 18 mit dem Abblasebehälter 16 in Verbindung. Dargestellt ist auch der Druckentnahmekanal 22, der innerhalb der Wandung des Formstücks 4 und im Gehäuseblock 8 (nicht sichtbar) verläuft.

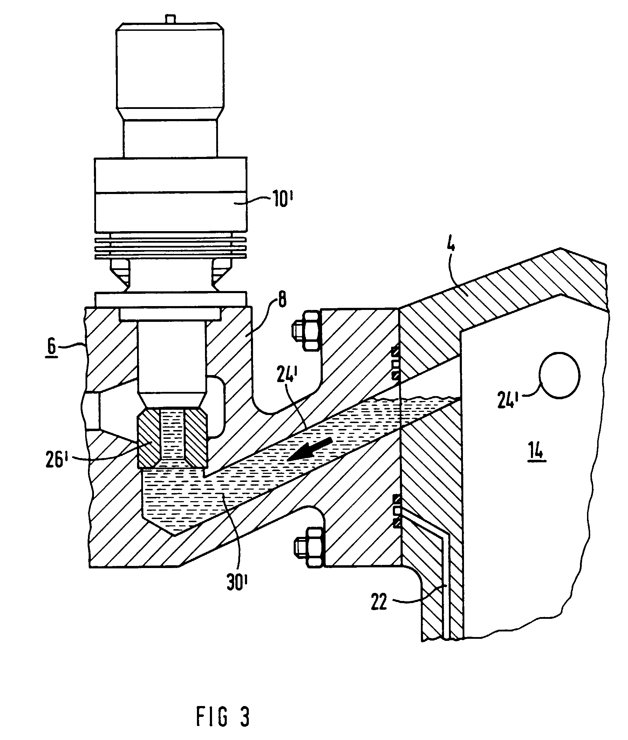

Bei dem in Figur 3 dargestellten Ausführungsbeispiel verläuft der nahezu vollständig mit Wasser gefüllte Kanal 24' innerhalb des Gehäuseblocks 8 schräg nach unten und ist ebenfalls siphonartig ausgebildet. Die Wasservorlage 30' steht hier vom Innenraum 14 des Formstücks 4 bis zum Ventilsitz 26' des Sicherheitsventils 10'. Wie im Ausführungsbeispiel gemäß Figur 2 ist auch hier in der Wandung des Formstücks 4 der Druckentnahmekanal 22 dargestellt.

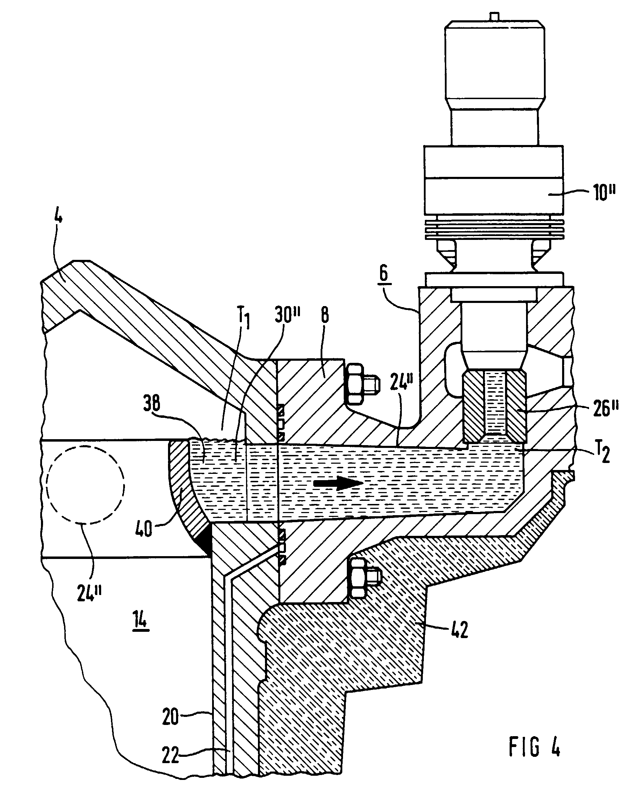

Bei dem in Figur 4 dargestellten bevorzugten Ausführungsbeispiel verläuft der Kanal 24" für die Wasservorlage 30" im wesentlichen horizontal. Der Kanal 24" steht mit einem innerhalb des Formstücks 4 vorgesehenen Ringkanal 38 in Verbindung. Der Ringkanal 38 ist durch eine an der Manschette 20 des Formstücks 4 angeformte, insbesondere umlaufende, Schulter 40 gebildet. Ebenso stehen die Kanäle 24" der übrigen am Umfang des Formstücks 4 verteilt angeordneten Ventilanordnungen 6 mit dem Ringkanal 38 in der Art von Anzapfungen in Verbindung, so daß alle Kanäle 24" eine gemeinsame Wasservorlage 30" aufweisen.

Mindestens ein Teil des Formstücks 4 und des Gehäuseblocks 8 der Ventilanordnung 6 sind von einer Wärmeisolierung 42 umgeben, die in Figur 4 nur teilweise dargestellt ist. Zu sehen ist, daß die Wanddicke der Wärmeisolierung 42 ausgehend vom Formstück 4 entlang des Gehäuseblocks 8 bis hin zum Ventilsitz 26" abnimmt. Durch eine derartige Isolierungsmaßnahme kann in einfacher Weise die Wassertemperatur der Wasservorlage 30" beeinflußt oder eingestellt werden, so daß durch eine gezielte Wärmebeaufschlagung des Gehäuseblocks 8 ein Temperaturgefälle erzeugt wird. Dabei wird zweckmäßigerweise ausgehend von einer Temperatur T₁ des Dampfes von etwa 300° bis 350° C im Formstück 4, z.B. am Übergang von Dampf zu Wasser, im Bereich des Ventilsitzes 26" eine Temperatur T₂ von etwa 150° bis 200° C eingestellt. Durch am Gehäuseblock 8 aufgepunktete (nicht dargestellte) Thermoelemente kann diese Temperatur T₂ überwacht werden.

Durch die Einstellung eines derartigen Temperaturgefälles wird im Anforderungsfall, bei dem bei geöffnetem Sicherheitsventil 10" zunächst das Wasser aus der Wasservorlage 30" und anschließend heißer Dampf über den Ventilsitz 26" abströmt, ein Temperaturschock im Gehäuseblock 8 sicher vermieden. Im daran anschließenden Normalbetrieb kann sich vor dem nun wieder geschlossenen Sicherheitsventil 10" im Kanal 24" Wasser sammeln, das durch kondensierenden Dampf entsteht. Das Wasser bleibt als Wasservorlage 30" in dem oder jedem Kanal 24" und im allen Ventilanordnungen 6 gemeinsamen Ringkanal 38 stehen.

## Patentansprüche

1. Vorrichtung zur Drucksicherung eines Druckbehälters (2) mit einer Ventilanordnung (6), die an einem mit dem Druckbehalter (2) verbundenen Formstück (4) angeordnet ist, wobei die Ventilanordnung (6) mindestens ein Sicherheitsventil (10; 10';10") mit einem Ventilsitz (26; 26'; 26") in einem Gehäuseblock (8) umfaßt, und wobei eine Wasservorlage (30; 30'; 30") für das Sicherheitsventil (10; 10'; 10") vorgesehen ist,
**dadurch gekennzeichnet,** daß ein Kanal (24; 24'; 24") zur Aufnahme der Wasservorlage (30; 30'; 30") innerhalb des Gehäuseblocks (8) und/oder innerhalb des Formstücks (4) vorgesehen ist.

2. Vorrichtung nach Anspruch 1,
**dadurch gekennzeichnet,** daß mehrere, vorzugsweise drei, Ventilanordnungen (6) am Umfang des Formstücks (4) verteilt angeordnet sind.

3. Vorrichtung nach Anspruch 1 oder 2,
**dadurch gekennzeichnet,** daß die oder jede Ventilanordnung (6) radial am rohrförmigen Formstück (4) angeflanscht ist.

4. Vorrichtung nach einem der Ansprüche 1 bis 3,
**dadurch gekennzeichnet,** daß die oder jede Ventilanordnung (6) eine Wärmeisolierung (42) aufweist, deren Isolierwirkung entlang des Kanals (24, 24', 24") für die Wasservorlage (30, 30', 30") abnimmt.

5. Vorrichtung nach einem der Ansprüche 1 bis 4,
**dadurch gekennzeichnet**, daß der oder jeder im Gehäuseblock (8) vorgesehene Kanal (24, 24', 24") für die Wasservorlage (30, 30', 30") siphonartig ausgebildet ist.

6. Vorrichtung nach einem der Ansprüche 1 bis 5,
**dadurch gekennzeichnet,** daß das Formstück (4) einen mit dem Kanal (24") eines jeden Gehäuseblocks (8) in Verbindung stehenden Ringkanal (38) für eine allen Ventilanordnungen (6) gemeinsame Wasservorlage (30") aufweist.

## Claims

1. Device for pressure-securing a pressure vessel (2), having a valve arrangement (6), which is arranged on a shaped piece (4) which is connected to the pressure vessel (2), with the valve arrangement (6) comprising at least one safety valve (10: 10'; 10") having a valve seat (26; 26'; 26") in a housing block (8)_{,} and with there being provided a hydraulic seal (30; 30'; 30") for the safety valve (10; 10'; 10"), characterised in that a channel (24; 24'; 24") for receiving the hydraulic seal (30; 30'; 30") is provided inside the housing block (8) and/or inside the shaped piece (4).

2. Device according to claim 1, characterised in that several, preferably three, valve arrangements (6) are distributed over the circumference of the shaped piece (4).

3. Device according to claim 1 or 2, characterised in that the valve arrangement or each valve arrangement (6) is radially flange-connected to the tubular shaped piece (4).

4. Device according to one of the claims 1 to 3, characterised in that the valve arrangement or each valve arrangement (6) has heat insulation (42), the insulating action of which decreases along the channel (24; 24'; 24") for the hydraulic seal (30; 30'; 30").

5. Device according to one of the claims 1 to 4, characterised in that the channel or each channel (24; 24'; 24") for the hydraulic seal (30; 30'; 30"), which channel is provided in the housing block (8), is constructed in a siphon-like manner.

6. Device according to one of the claims 1 to 5, characterised in that the shaped piece (4) has an annular channel (38), which is connected to the channel (24") of each housing block (8), for a hydraulic seal (30") which is common to all of the valve arrangements (6).

## Revendications

1. Dispositif de maintien de la pression d'une cuve (2) sous pression, comportant un dispositif (6) à vannes qui est monté sur un raccord (4) relié à la cuve (2) sous pression, le dispositif (6) à vannes comportant au moins une vanne (10; 10'; 10") de sûreté ayant un siège (26, 26'; 26") de vanne dans un bloc (8) formant corps, et une réserve (30; 30'; 30") d'eau étant prévue pour la vanne (10; 10'; 10") de sûreté, caractérisé en ce qu'il est prévu à l'intérieur du bloc (8) formant corps et/ou à l'intérieur du raccord (4) un canal (24; 24'; 24") destiné à recevoir la réserve (30; 30'; 30") d'eau.

2. Dispositif suivant la revendication 1, caractérisé en ce qu'il est réparti sur le pourtour du raccord (4) plusieurs, de préférence trois, dispositifs (6) à vannes.

3. Dispositif suivant la revendication 1 ou 2, caractérisé en ce que le dispositif (6) à vannes ou chaque dispositif (6) à vannes est bridé radialement au raccord (4) tubulaire.

4. Dispositif suivant une des revendications 1 à 3, caractérisé en ce que le dispositif (6) à vannes ou chaque dispositif (6) à vannes comporte une isolation (42) thermique dont l'effet d'isolation diminue le long du canal (24; 24'; 24") destiné à recevoir la réserve (30; 30'; 30") d'eau.

5. Dispositif suivant une des revendications 1 à 4, caractérisé en ce que le canal (24; 24'; 24") ou chaque canal (24; 24'; 24") destiné à recevoir la réserve (30; 30'; 30"), prévu dans le bloc (8) formant corps, est agencé en siphon.

6. Dispositif suivant une des revendications 1 à 5, caractérisé en ce que le raccord (4) comporte un canal (38) annulaire qui communique avec le canal (24") de chaque bloc (8) formant corps et qui est destiné à une réserve (30") d'eau commune à tous les dispositifs (6) à vannes.
